# EUROPÄISCHE PATENTSCHRIFT

(11) **EP 2 358 593 B1**
(45) Veröffentlichungstag und Bekanntmachung des Hinweises auf die Patenterteilung: **03.10.2012**
(21) Anmeldenummer: 09799302.6
(22) Anmeldetag: 07.12.2009
(51) Int. Cl.: B64C 1/20, B64D 9/00, B64D 11/06

(54) **VORRICHTUNG ZUM BEFESTIGEN EINES OBJEKTS AN EINER SCHIENE**
DEVICE FOR FIXING AN OBJECT TO A RAIL
DISPOSITIF PERMETTANT DE FIXER UN OBJET SUR UN RAIL

(30) Priorität: 17.12.2008 DE 102008062466; 17.12.2008 US 138233 P
(43) Veröffentlichungstag der Anmeldung: 24.08.2011
(73) Patentinhaber: Airbus Operations GmbH, 21129 Hamburg (DE)
(72) Erfinder: BLEES, Christoph, 20251 Hamburg (DE); KRAUSE, Dieter, 21244 Buchholz (DE); KOBLITZ, Ralf, 21129 Hamburg (DE); GEHLEN, Oliver, 25451 Quickborn (DE); HUMFELDT, Dirk, 22607 Hamburg (DE); HERZOG, Mark, 22885 Barsbüttel (DE)
(74) Vertreter: Maiwald Patentanwalts GmbH
(86) Internationale Anmeldenummer: PCT/EP2009/066529
(87) Internationale Veröffentlichungsnummer: WO 2010/079031

(56) Entgegenhaltungen:
- EP-A1- 1 892 142
- WO-A1-2009/068331
- DE-A1- 1 912 881
- DE-A1- 4 345 006
- DE-A1- 19 851 392
- DE-A1-102004 047 455
- DE-A1-102006 021 956
- US-A- 4 213 593
- US-A- 5 427 349

## Beschreibung

### VERWANDTE ANMELDUNGEN

Die vorliegende Anmeldung beansprucht die Priorität der US Provisional Patentanmeldung Nr. 61/138,233, eingereicht am 17. Dezember 2008 und der deutschen Patentanmeldung Nr. 10 2008 062 466.7, eingereicht am 17. Dezember 2008.

### TECHNISCHES GEBIET DER ERFINDUNG

Die Erfindung betrifft eine Vorrichtung zum Befestigen eines Objekts an einer Schiene, eine Verwendung einer derartigen Vorrichtung und ein Flugzeug mit mindestens einem Objekt und mindestens einer Vorrichtung zum Befestigen eines Objekts an einer Schiene.

### HINTERGRUND DER ERFINDUNG

Im Folgenden werden Aspekte der Erfindung mit Bezug auf das Befestigen von Objekten in einer Kabine eines Passagierflugzeugs beschrieben. Diese konkrete Ausführung der Beschreibung ist jedoch lediglich exemplarisch zu verstehen. Die Aspekte der Erfindung sind übertragbar auf andere Einsatzgebiete, die in irgendeiner Weise das Befestigen von Objekten an einer Schiene notwendig machen, sei es in einem Fahrzeug oder in einer stationären Räumlichkeit.

Eine der Anforderungen an Kabinen in Passagierflugzeugen, die möglicherweise in Zukunft verstärkt an Bedeutung gewinnen könnte, ist die Möglichkeit einer schnellen Umbaubarkeit (auch "Rekonfiguration" genannt) des Kabinenaufbaus ("Kabinenlayout") während des herkömmlichen Flugzeugbetriebs. Dafür ist es erforderlich, Komponenten in der Kabine flexibel an unterschiedlichen Orten befestigen zu können, wobei das Verändern der Position, das Befestigen und das erneute Lösen betreffender Objekte möglichst schnell vonstatten gehen sollte. Hierfür werden verbreitet sog. Sitzschienen verwendet, die innerhalb der Kabine des Passagierflugzeugs im Kabinenfußboden verlaufen und an denen Kabinenkomponenten montiert werden können. An den Sitzschienen können jegliche Arten von Komponenten angeordnet werden, die nicht nur Passagiersitze umfassen, sondern auch größere Einbauten ("Monumente"), wie beispielsweise Küchen ("Galley") und Toiletten. Die Komponenten können bevorzugt entlang der Sitzschienen verschoben und an anderen vorgegebenen Stellen befestigt werden.

Derzeitige Lösungen zur Anbindung von Monumenten an Sitzschienen basieren auf Gewindeeinsätzen, die in eine Sitzschiene eingelegt und an der gewünschten Position mit dem betreffenden Monument verschraubt werden. Ein Toleranzausgleich in der Fußbodenebene erfolgt hierbei durch einen Doppelexzenter, während Toleranzen in der Höhe über Unterlegscheiben oder eine Gewindehülse, wie beispielsweise in DE 102004012262 A1 oder US 20070063101 A1 vorgeschlagen, ausgeglichen werden können.

EP 1 892 142 A1 welches den nächsten Stand der Technik bildet, zeigt ein Befestigungsgerät zum Befestigen eines Stuhls oder eines Sitzes an einer Schiene, bei der Arretierkörper über ein Bedienelement mit der Schiene verklemmt/arretiert werden können.

Bei den bekannten Lösungen zum Montieren von Monumenten innerhalb einer Kabine ist insbesondere nachteilig, dass die Montage und Demontage sehr arbeitsaufwändig ist. Zudem werden lose und damit verlierbare Einzelteile verwendet. Weiterhin ist zum Befestigen oder Lösen betreffender Objekte an einer Schiene eine werkzeuglose Montage oder Demontage nicht möglich. Des weiteren ist es mit bekannten Vorrichtungen nicht möglich, Monumente durch Verschieben in der Sitzschiene, d. h. ohne ein Ausheben aus der Sitzschiene, in eine neue Position zu bringen.

### ZUSAMMENFASSUNG DER ERFINDUNG

Demgemäß könnte es als Aufgabe der Erfindung angesehen werden, eine Vorrichtung zum Befestigen eines Objekts an einer Schiene vorzuschlagen, die zumindest einige der vorangehend geschilderten Nachteile reduziert oder gänzlich beseitigt. Im Besonderen könnte eine Aufgabe sein, eine derartige Vorrichtung vorzuschlagen, bei der ein werkzeugloses Montieren und Demontieren eines Objekts an einer Schiene ermöglicht wird. Als eine weitere Aufgabe könnte angesehen werden, eine derartige Vorrichtung zu schaffen, mit der das zu montierende Objekt entlang der Schiene verschoben werden kann.

Diese Aufgabe könnte durch eine Vorrichtung zum Befestigen eines Objekts an einer Schiene, eine Verwendung einer derartigen Vorrichtung sowie ein Flugzeug mit mindestens einer derartigen Vorrichtung gemäß den unabhängigen Ansprüchen gelöst werden. Verschiedene Ausführungsbeispiele der vorliegenden Erfindung werden in den abhängigen Ansprüchen beschrieben.

Ein erster wichtiger Aspekt der Erfindung liegt in der Verwendung mindestens eines Arretierkörpers, der eine Form aufweist, die ihm ein Einführen in die betreffende Schiene sowie ein Arretieren an der Schiene ermöglicht. Beispielsweise könnte eine Sitzschiene in einem Fußboden einer Passagierkabine eines Flugzeugs betrachtet werden, die üblicherweise einen in Erstreckungsrichtung verlaufenden zentralen Schlitz aufweist, der in regelmäßigen Abständen - zumeist jeweils ein Zoll - durch eine im Wesentlichen kreisrunde Öffnung durchsetzt ist. Der obige Arretierkörper kann derart korrespondierend dazu geformt sein, dass er beispielsweise einen länglichen in den Schlitz einführbaren Körper mit mehreren kreisabschnittsförmigen Vorsprüngen aufweist, die mit den kreisrunden Öffnungen der Sitzschiene korrespondieren. Durch Versetzen des Arretierkörpers innerhalb der Schiene können die Vorsprünge unter die Zwischenräume zwischen den einzelnen kreisrunden Öffnungen - die wie nasenartige Vorsprünge ausgestaltet sind - geraten und dort in einer sogenannten Arretierposition beispielsweise eine kraft- oder formschlüssige Verbindung hervorrufen.

Der Arretierkörper ist bewegbar an einem Grundkörper gelagert, so dass er sich relativ zu der Schiene derart bewegen kann, dass er sich in die Schiene hineinbewegen oder sich aus der Schiene herausbewegen kann. Dies ermöglicht das wahlweise Befestigen oder Lösen des Arretierkörpers und damit des Grundkörpers, an dem das zu befestigende Objekt angeordnet ist. Der Grundkörper ist indes bevorzugt so ausgestaltet, dass er auf einer Oberseite der Schiene aufliegen und dort die auf ihm lastende Gewichtskraft in die Schiene einleiten kann.

Ein weiterer Aspekt der Erfindung liegt darin, dass die erfindungsgemäße Vorrichtung ein Bedienelement aufweist, mit dem werkzeuglos und rein durch manuelle Einwirkung ein Befestigen oder Lösen des Objekts an der Schiene ermöglicht wird. Dies könnte durch ein manuelles Auslenken des Arretierkörpers realisiert werden.

Erfindungsgemäß weist die Vorrichtung einen Tauchkörper auf, der bewegbar in Richtung zur Schiene in dem Grundkörper gelagert ist, so dass er bei Bedarf in die Schiene eintauchen und mit ihr eine formschlüssige Verbindung hervorrufen kann, um eine Bewegung des Grundkörpers quer oder längs zur Schiene zu verhindern. Wird der Arretierkörper an der Schiene befestigt, ist nicht unbedingt sichergestellt, dass eine Bewegung der erfindungsgemäßen Vorrichtung in der die Schiene aufweisenden Ebene verhindert wird. Durch die Kombination des Tauchkörpers mit dem Arretierkörper kann eine Arretierung der erfindungsgemäßen Vorrichtung in alle drei Raumrichtungen sichergestellt werden. Erfindungsgemäß ist zwischen dem Arretierkörper und dem Tauchköper eine Feder angeordnet.

Die erfindungsgemäße Vorrichtung weist ein Bedienelement auf, welches etwa aus einem drehbaren Körper mit mindestens einem Exzenter besteht, wobei durch Drehen des Bewegungselements der Exzenter eine Bewegung des Arretierkörpers, des Tauchkörpers oder beider Körper veranlasst.
Gemäß einer vorteilhaften Weiterbildung der erfindungsgemäßen Vorrichtung weist der Grundkörper an seiner Unterseite eine ebene Oberfläche mit mindestens einem Vorsprung auf, dessen Form mit dem zentralen oder einem anders angeordneten Schlitz in der Schiene korrespondiert. Dies ermöglicht der Vorrichtung sowohl das Einleiten der Gewichtskraft in die Schiene als auch das Gleiten entlang der Schiene, wobei der Vorsprung in den Schlitz der Schiene eintaucht und eine Führung erlaubt. So wäre es vorstellbar, dass beispielsweise ein Objekt an mehreren erfindungsgemäßen Vorrichtungen in mehreren benachbarten oder parallelen Sitzschienen in einer Kabine eines Flugzeugs angeordnet ist und entlang der Schienen innerhalb der Kabine zu einem gewünschten Aufstellort verschoben werden kann. Bei einer derartigen Ausgestaltung des Grundkörpers könnte sichergestellt werden, dass auch besonders große und schwere Objekte nur entlang der Erstreckungsrichtung der Schienen verschoben werden können und keine anderen Teile des Fußbodens berührt und beschädigt werden.
Besonders bevorzugt weist das Bedienelement mindestens zwei Exzenter auf, wobei einer der Exzenter zum Bewegen des Arretierkörpers verwendet wird, ein weiterer Exzenter für das Bewegen des Tauchkörpers. Die Exzenter sollten dabei derart ausgestaltet sein, dass zum Arretieren des Arretierkörpers in der Schiene und zum Einbringen des Tauchkörpers in die Schiene ein entsprechender Totpunkt der Exzenter überstrichen wird, so dass eine Selbsthemmung eintritt und sich die Verbindung zu der Schiene nicht selbstständig löst. Dies ist insbesondere dann wichtig, wenn sich das Objekt nicht in einem stationären, unbewegten Raum befindet, sondern beispielsweise in einer Passagierkabine eines Flugzeugs und dort regelmäßig heftigen Bewegungen unterschiedlicher Richtungen ausgesetzt ist.

Besonders bevorzugt ist das Bedienelement drehbar in dem Grundkörper angeordnet, so dass eine möglichst kompakte Baueinheit realisiert werden kann, durch die der vorhandene Bauraum möglichst effektiv ausgenutzt wird. Ein positionsgenaues Lagern des Bedienelements innerhalb des Grundkörpers ist nicht erforderlich. Es sollte lediglich sichergestellt werden, dass das Arretierelement durch das Bedienelement ausreichend stark an eine Begrenzung der Schiene gezogen wird, so dass eine Klemmwirkung zwischen dem Grundkörper, dem Arretierelement und der Schiene eintritt. Dies könnte etwa dadurch realisiert sein, dass das Arretierelement mittels Verbindungselementen mechanisch mit dem Bedienelement derart verbunden ist, dass das Arretierelement einer Bewegung des Bedienelements folgt. Befindet sich das Arretierelement innerhalb der Schiene unterhalb einer Begrenzung derselben, könnte es durch leichtes Anheben des Bedienelements gegen die Begrenzung der Schiene - etwa Vorsprünge oder dergleichen - gedrückt werden. Das Bedienelement wiederum könnte sich zum leichten Anheben etwa mittels eines der Exzenter von einer Fläche des Grundkörpers in eine Richtung abstoßen, die entgegengesetzt zur Schiene liegt. Dadurch wird der Arretierkörper gegen die Begrenzung der Schiene unterhalb des Grundkörpers in Richtung des Grundkörpers gezogen. Hervorgerufen durch die Gegenkraft wird der Grundkörper auf die Schiene in Richtung des Arretierkörpers gedrückt. Die erfindungsgemäße Vorrichtung klemmt sodann an der Schiene.

Weiterhin ist bevorzugt, dass der Grundkörper Mittel zum Aufnehmen des Objekts aufweist. Diese Mittel können vielfältiger Art sein, beispielsweise Bohrungen, form- oder kraftschlüssige Verbindungselemente und dergleichen. Optional wäre auch die Verwendung von Ausgleichsmitteln zum Ausgleichen der Lage des zu arretierenden Objekts bezüglich der erfindungsgemäßen Vorrichtung sinnvoll, als Beispiel hierfür wären Doppelkeilanordnungen oder ähnliches vorstellbar.

Es wird darauf hingewiesen, dass Merkmale und Nebeneffekte der vorliegenden Erfindung mit Verweis auf verschiedene Ausführungsformen der Erfindung beschrieben worden sind. Weitere Merkmale, Vorteile und Anwendungsmöglichkeiten der vorliegenden Erfindung ergeben sich aus der nachfolgenden Beschreibung des Ausführungsbeispiels und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehungen.

### KURZE BESCHREIBUNG DER FIGUREN

In den Figuren stehen gleiche Bezugszeichen für gleiche oder ähnliche Objekte.
Fig. 1a zeigt eine Explosionsansicht der erfindungsgemäßen Vorrichtung.
Fig. 1b zeigt eine Detailansicht des Bedienelements.
Fig. 2 zeigt eine zusammengesetzte erfindungsgemäße Vorrichtung.
Fig. 3 zeigt ein Flugzeug mit einer Kabine und mindestens einer erfindungsgemäßen Vorrichtung.

### DETAILLIERTE BESCHREIBUNG DER ZEICHNUNGEN

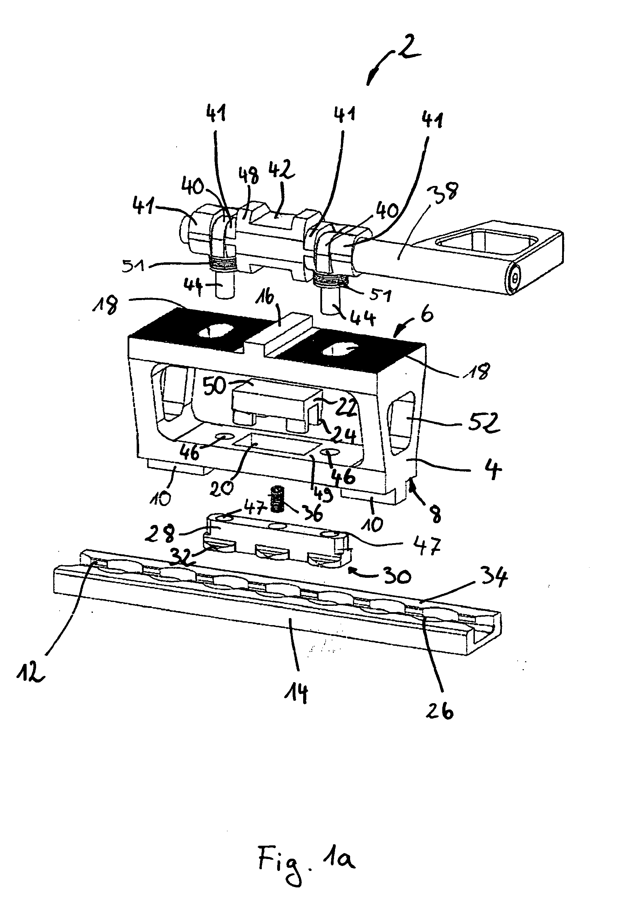

In Fig. 1a wird eine Explosionsansicht einer erfindungsgemäßen Vorrichtung 2 gezeigt. Als Hauptelement der erfindungsgemäßen Vorrichtung 2 ist der Grundkörper 4 mit einer Oberseite 6 und einer Unterseite 8 anzusehen. Die Unterseite 8 besitzt eine im Wesentlichen ebene Oberfläche, die in der gezeigten Darstellung zwei Vorsprünge 10 aufweist, die in einen Schlitz 12 einer Sitzschiene 14 eingreifen können, so dass der Grundkörper 4 geführt auf der Sitzschiene 14 gleiten kann.

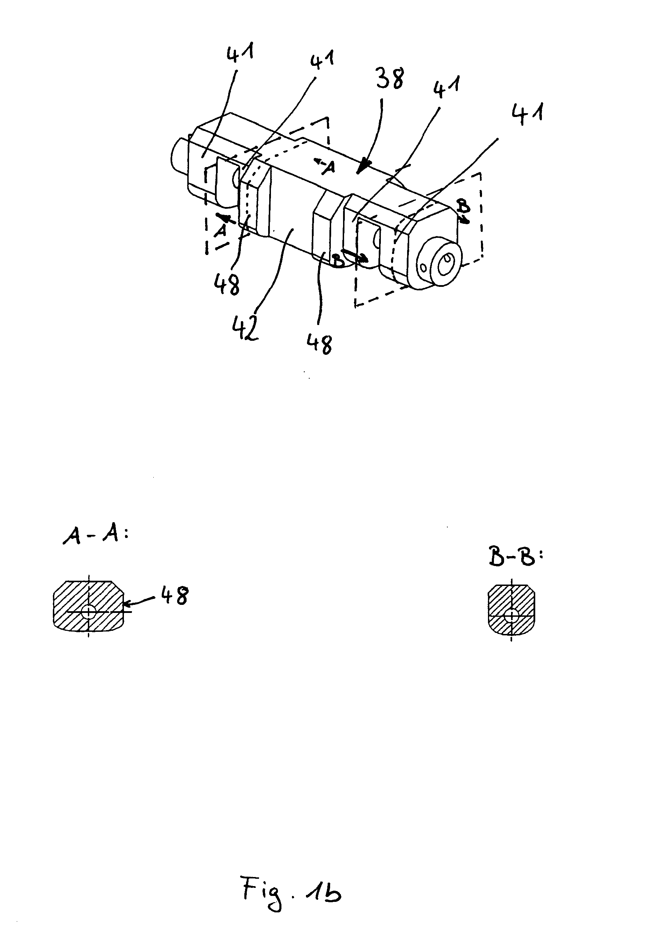

Die Oberseite 6 des Grundkörpers 4 dient zur Aufnahme eines in Fig. 1 nicht dargestellten Objekts, welches mittels der erfindungsgemäßen Vorrichtung 2 an der Schiene 14 befestigt werden soll. Exemplarisch weist die Oberseite 6 des Grundkörpers 4 einen Vorsprung 16 auf, der zum passgenauen Ausrichten des Objekts an die erfindungsgemäße Vorrichtung 2 verwendet werden kann. Darüber hinaus weist die Oberseite 6 des Grundkörpers 4 in dem gezeigten Ausführungsbeispiel zwei Langlöcher 18 auf, in der beispielsweise jeweils eine Gewindehülse geführt werden kann, die eine Schraubbefestigung eines durch den Vorsprung 16 ausgerichteten Objekts erlauben.

An der Unterseite 8 des Grundkörpers 4 befindet sich eine Öffnung 20, in der ein Tauchkörper 22 geführt zur Sitzschiene 14 hin oder von der Sitzschiene 14 weg gleiten kann. Der Tauchkörper 22 ist derart korrespondierend mit der Sitzschiene 14 ausgeformt, dass er mittels Vorsprüngen 24 in kreisrunde Öffnungen 26 in der Sitzschiene 14 eingreifen kann, die in regelmäßigen Abständen - beispielsweise ein Zoll - über im Wesentlichen die gesamte Erstreckung der Sitzschiene 14 angebracht sind. Greift der Tauchkörper 22 derart in die Sitzschiene 14 ein, kann durch die formschlüssige Verbindung ein Bewegen des Grundkörpers 4 quer oder längs zur Sitzschiene 14 vermieden werden.

Die erfindungsgemäße Vorrichtung 2 weist außerdem einen Arretierkörper 28 auf, der in diesem Beispiel als länglicher Körper ausgeführt ist und an seiner Unterseite 30 mehrere Vorsprünge 32 aufweist, die in die Öffnungen 26 der Sitzschiene 14 eintauchen können. Zwischen den Öffnungen 26 der Sitzschiene 14 befinden sich Vorsprünge 34, die den Übergang zwischen den kreisrunden Öffnungen 26 und dem zentralen Schlitz 12 darstellen. Unterhalb dieser können die Vorsprünge 32 des Arretierkörpers 28 positioniert und durch eine entsprechende von oberhalb der Sitzschiene 14 wirkende Zugkraft von unten an die Vorsprünge 34 der Sitzschiene 14 gepresst werden, wodurch die erfindungsgemäße Vorrichtung 2 an der Sitzschiene 14 festgeklemmt wird. Ist ein Lösen und Verschieben des Grundkörpers 4 und des damit verbundenen Objekts entlang der Sitzschiene 14 erforderlich, kann der Arretierkörper 28 aus seiner Arretierposition unterhalb der Vorsprünge 34 der Sitzschiene 14 gelöst werden, so dass sich die Vorsprünge 32 des Arretierkörpers 28 von den Vorsprüngen 34 der Sitzschiene 14 weg in Richtung des Innern der Sitzschiene 14 bewegen und frei gleiten können. Der Grundkörper 4 kann dementsprechend in Erstreckungsrichtung der Sitzschiene 14 verschoben werden. Es muss kein Herausheben oder dergleichen eines mit dem Grundkörper 4 verbundenen Objekts bzw. des Grundkörpers 4 aus dem Schlitz 12 oder den Öffnungen 26 der Sitzschiene 14 erfolgen, so dass eine Umpositionierung sehr einfach ist.

Eine Feder 36, die zwischen dem Arretierkörper 28 und dem Tauchkörper 22 angeordnet ist, bringt permanent eine Gegenkraft auf den Tauchkörper 22 auf, durch die ein selbstständiges Herauslösen aus den Öffnungen 26 der Sitzschiene 14 gewährleistet werden kann, so lange keine Druckkraft auf den Tauchkörper 22 einwirkt.

An einem Bedienelement 38, das als länglicher Körper ausgeführt ist, sind in dem gezeigten Ausführungsbeispiel zwei beispielhaft als Augen ausgeführte Lagermittel 40 jeweils von einem äußeren und einem inneren Exzenter 41 umgeben und drehbar auf dem Bedienelement gelagert. Zwischen den jeweils inneren Exzentern 41 ist ein zusätzlicher zentraler Exzenter 42 angeordnet. Verbindungselemente 44 können jeweils die Lagermittel 40 mit dem Arretierkörper 28 verbinden, indem sie durch korrespondierende Öffnungen 46 des Grundkörpers 4 in Richtung der Schiene 14 ragen und in jeweils eine Öffnung 47 des Arretierkörpers 28 eingeschraubt werden können.

Der zentrale Exzenter 42 weist an seinen beiden Seiten je eine nockenartig geformte Oberfläche 48 auf, die auf der Oberseite 50 des Tauchkörpers 22 aufliegen können und dabei zum Auslenken des Tauchkörpers 22 in Richtung der Sitzschiene 14 dienen. Wird das Bedienelement 38 um seine Erstreckungsachse herum gedreht, erstrecken sich die nockenartig geformten Oberflächen 48 aufgrund ihrer exzentrischen Ausgestaltung relativ zur Erstreckungsachse des Bedienelements 38 mehr oder weniger von der Erstreckungsachse in Richtung der Sitzschiene 14, so dass abhängig von der Stellung des Bedienelements 38 der Tauchkörper 22 mehr oder weniger zur Sitzschiene 14 hin ausgelenkt wird. Liegt der Grundkörper 4 auf der Sitzschiene 14 auf, kann demnach durch Drehen des Bedienelements 38 in eine Arretierposition ein Sichern des Grundkörpers 4 über den in die Sitzschiene 14 eingetauchten Tauchkörper 22 in Quer- und Längsrichtung erreicht werden.

Die um die Lagermittel 40 herum angeordneten inneren und äußeren Exzenter 41 sind derart an dem Bedienelement 38 angeordnet, dass sie mit einer jeweiligen ebenfalls nockenartig geformten Oberfläche auf Tellerfedern 51 einwirken, die an den Verbindungselementen 44 angeordnet sind und im montierten Zustand der erfindungsgemäßen Vorrichtung 2 auf einem Bereich des Grundkörpers 4 um die Bohrungen 46 herum aufliegen. Durch Drehen des Bedienelements 38 um seine Erstreckungsachse des Bedienelements 38 herum erstreckt sich die nockenartig geformte Oberfläche der Exzenter 41 mehr oder weniger von der Erstreckungsachse in Richtung der Sitzschiene 14, so dass die Tellerfedern 51 mehr oder weniger stark auf den Bereich um die Bohrungen 46 herum gedrückt werden.

Durch das Einwirken der Exzenter 41 auf die Tellerfedern 51 sowie des zentralen Exzenters 42 auf den Tauchkörper 22 wird das Bedienelement 38 in dem Grundkörper 4 von der Sitzschiene 14 weg gedrückt, wodurch dementsprechend auf das mit dem Bedienelement 38 verbundene Arretierelement 28 eine Zugkraft wirkt. Ist die Zugkraft ausreichend hoch und sind die Vorsprünge 32 des Arretierelements 28 unterhalb der Vorsprünge 34 der Sitzschiene 14 angeordnet, kann eine Klemmwirkung zwischen dem Arretierelement 28, der Sitzschiene 14 und dem Grundkörper 4 hergestellt werden. Die Zugkraft auf das Arretierelement 28 ist dabei abhängig von der jeweiligen Ausgestaltung insbesondere der Exzentrizität der Exzenter 41 und 42, so dass eine für ein zu befestigendes Objekt erforderliche Klemmkraft durch entsprechende Ausgestaltung der Exzenter eingestellt werden kann. Es sollte darauf geachtet werden, dass die Exzenter 41 und 42 vor Erreichen einer entsprechenden Arretierposition einen Bewegungstotpunkt überschreiten, so dass eine Selbsthemmung eintritt und durch die Zugkraft auf den Arretierkörper 28 die Arretierposition nicht wieder selbständig verlassen wird.

Der Vollständigkeit halber sei darauf hingewiesen, dass die Tellerfedern 51 eine optionale Weiterbildung der erfindungsgemäßen Vorrichtung 2 darstellen, die besonders gut dazu geeignet sind, eine harmonische und definierte Kraftwirkung auf den Grundkörper 4 und das Arretierelement 28 auszuüben und eine ausreichende Elastizität zum Lösen der erfindungsgemäßen Vorrichtung 2 zuzulassen.

In Fig. 1b wird das Bedienelement 38 näher dargestellt, der Einfachheit halber jedoch ohne Griffstück und ohne Lagermittel 40. In den Schnitten der Exzenter 41 (Schnitt A-A) und einer nockenartig geformten Oberfläche 48 des Exzenters 42 (Schnitt B-B) zeigen sich die geometrischen Ausgestaltungen der Exzenter 41 und 42 etwas deutlicher, insbesondere die Exzentrizität zu einer Erstreckungsachse des Bedienelements 38. Das Bedienelement ist in Fig. 1b in einer Neutralstellung angeordnet, in der das Arretierelement 28 nicht an die Sitzschiene 14 gepresst werden würde, wenn es sich unterhalb des Bedienelements 38 befände.

Die Exzenter 41 und die nockenartig geformten Oberflächen 48 des Exzenters 42 sind an ihrer zur Sitzschiene 14 zugewandten Seite an den Ecken abgerundet, so dass das Erreichen einer Arretierposition der erfindungsgemäßen Vorrichtung 2 erleichtert wird. An den der Sitzschiene 14 abgewandten Ecken könnten die Exzenter 41 bzw. die nockenartig geformten Oberflächen 48 derart ausgestaltet sein, dass das Drehen des Bedienelements 38 über eine Arretierposition oder über eine Neutralposition in eine entgegengesetzte Richtung durch Anschläge oder andere mechanische Eigenschaften nicht möglich ist.

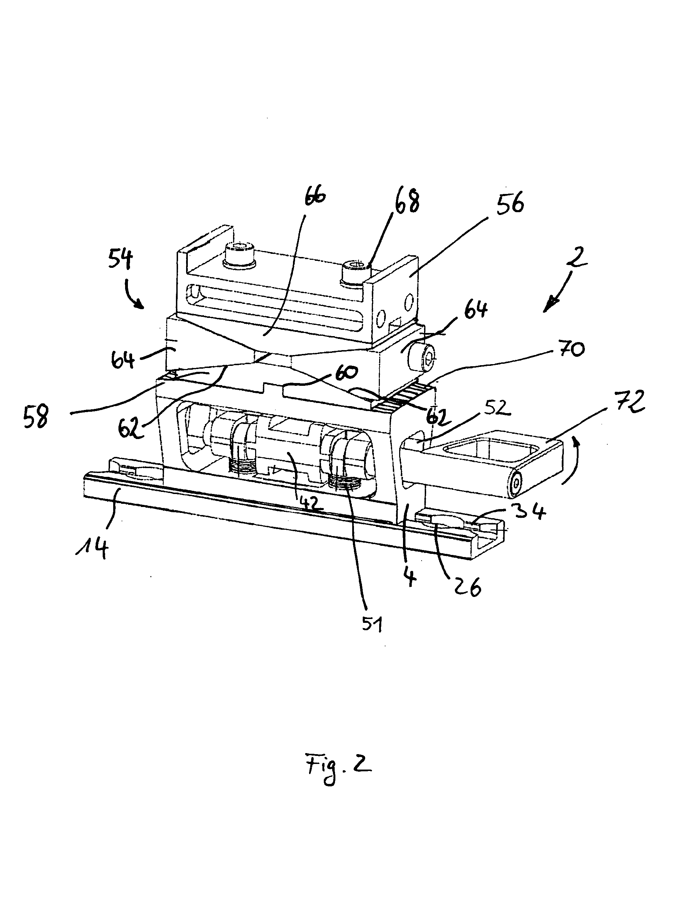

Das Bedienelement 38 befindet sich im montierten Zustand innerhalb des Grundkörpers 4 und ragt durch eine Öffnung 52 an einer Seitenfläche des Grundkörpers 4 aus diesem heraus, wie in Fig. 2 zu sehen ist. Befindet sich die erfindungsgemäße Vorrichtung 2 nicht in einer Arretierposition, ist das Bedienelement locker und beweglich innerhalb des Grundkörpers 4 angeordnet.

In der Darstellung aus Fig. 2 ist auf dem Grundkörper 4 eine Doppelkeilanordnung 54 angeordnet, die das zu befestigende Objekt 56 trägt. Das Objekt 56 ist in dieser gewählten Darstellung lediglich als ein mögliches Kopplungselement oder dergleichen gezeigt, da die erfindungsgemäße Vorrichtung 2 sehr viel kleiner ist als das zu befestigende Objekt 56 und sich daher eine derartige Vereinfachung der Darstellung anbietet.

Die Vorsprünge 10 des Grundkörpers 4 befinden sich in dem Schlitz 12 der Sitzschiene 14. Die Unterseite 8 des Grundkörpers 4 liegt bündig auf der Sitzschiene 14 auf. Ist die erfindungsgemäße Vorrichtung 2 nicht in einer Arretierposition, d. h. wirkt der Arretierkörper 28 nicht klemmend auf die Vorsprünge 34 der Sitzschiene 14, kann der Grundkörper 4 entlang der Erstreckungsrichtung der Sitzschiene 14 frei verschoben und positioniert werden.

In der Darstellung aus Fig. 2 ist jedoch der zentrale Exzenter 42 des Bedienelements 38 derart ausgelenkt, dass der Tauchkörper 22 zur Sitzschiene 14 hin gedrückt ist und mit seinen Vorsprüngen 24 entsprechend in die kreisrunden Öffnungen 26 der Sitzschiene eintaucht. Gleichermaßen drücken die Exzenter 41 über die Tellerfedern 51 auf den Grundkörper 4, was über die Verbindungselemente 44 eine Zugkraft zwischen dem Arretierkörper 28 und dem Bedienelement 38 auslöst. Die Vorsprünge 32 des Arretierelements 28 werden - wenn das Arretierelement 28 entsprechend innerhalb der Sitzschiene 14 positioniert ist - demnach an die Vorsprüngen 34 der Sitzschiene 14 gepresst. Zwischen dem Grundkörper 4, dem Arretierelement 28 und der Sitzschiene 14 herrscht eine Klemmwirkung, durch die die erfindungsgemäße Vorrichtung an der Sitzschiene 14 arretiert wird und das an dem Grundkörper angebrachte Objekt 56 dadurch an der Sitzschiene 14 befestigt ist.

Die exemplarisch an der erfindungsgemäßen Vorrichtung 2 angeordnete Doppelkeilanordnung 54 besteht im Wesentlichen aus einem Flanschkörper 58, der eine Vertiefung 60 sowie zwei abgeschrägte Flächen 62 aufweist. Auf diesen abgeschrägten Flächen 62 sind zwei Keile 64 angeordnet, die durch Verschieben zueinander und eine optionale Schraubbefestigung einem Abschlusskörper 66 die Höhe über der Oberseite 6 des Grundkörpers 4 vorgeben. Auf dem Abschlusskörper 66 ist wiederum das Objekt 56 angeordnet, welches durch Schrauben 68 in Gewindehülsen eingeschraubt ist, die in den Langlöchern 18 geführt werden..

Anstelle des Vorsprungs 16 und der Vertiefung 60 im Flanschkörper oder zusätzlich dazu könnte die Oberseite 6 des Grundkörpers 4 eine Verzahnung 70 aufweisen, die mit einer verzahnten Oberfläche einer Unterseite des Flanschkörpers 58 korrespondiert. Die Verzahnung 70 könnte etwa parallel zu der Sitzschiene 14 verlaufen. Hierdurch kann eine quer zur Sitzschiene 14 wirkende formschlüssige Verbindung zwischen den beiden Körpern gewährleistet werden, die durch ein zusätzliches Klemmen aufgrund der Schrauben 68 unterstützt werden kann.

Das Bedienelement 38 weist beispielhaft einen Hebel 72 auf, der bevorzugt ohne Werkzeug, d. h. nur durch manuelle mit der Hand eines Bedieners betätigt werden kann. Durch Umlegen des Hebels in die gezeigte horizontale Stellung kann eine Klemmwirkung und damit eine Arretierung des Objekts 56 an der Sitzschiene 14 erreicht werden. Bei einem Zurückschwenken des Hebels 72 in eine senkrechte Stellung wird die Arretierung aufgehoben und das Objekt 56 kann entlang der Erstreckungsrichtung der Sitzschiene 14 verschoben werden.

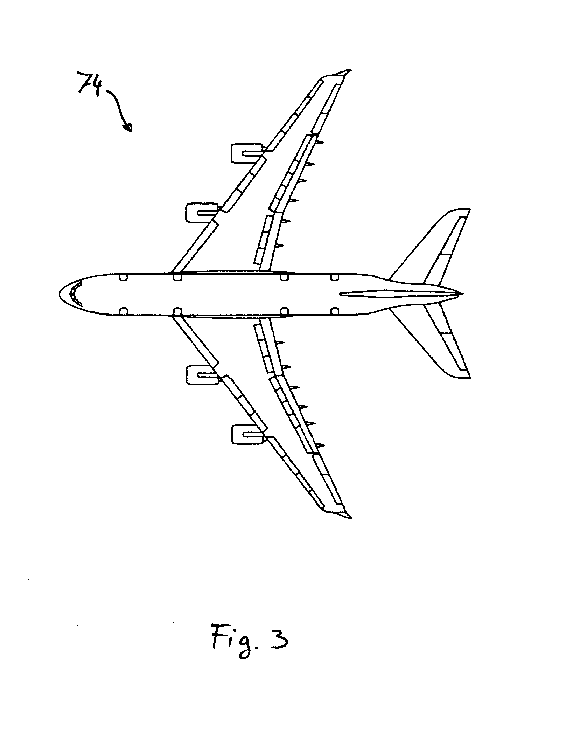

Fig. 3 zeigt ein typisches modernes Verkehrsflugzeug 74, das eine oder mehrere Passagierkabinen aufweist, in denen üblicherweise Sitzschienen 14 angeordnet sind, an denen Objekte arretiert werden. Das Verwenden der erfindungsgemäßen Vorrichtung 2 zum Arretieren eines Objekts an einer Schiene kann dahingehend eine Verbesserung darstellen, dass möglichst rasch, d. h. zwischen zwei aufeinanderfolgenden Flügen, eine Umkonfiguration der vollständigen Kabine erreicht werden könnte, falls gewünscht.

Ergänzend ist darauf hinzuweisen, dass "aufweisend" keine anderen Elemente ausschließt und "eine" oder "ein" keine Vielzahl ausschließt. Bezugszeichen in den Ansprüchen sind nicht als Einschränkung anzusehen.

### BEZUGSZEICHEN

- 2: erfindungsgemäße Vorrichtung
- 4: Grundkörper
- 6: Oberseite des Grundkörpers
- 8: Unterseite des Grundkörpers
- 10: Vorsprung
- 12: Schlitz
- 14: Sitzschiene
- 16: Vorsprung
- 18: Bohrung
- 20: Öffnung
- 22: Tauchkörper
- 24: Vorsprung
- 26: kreisrunde Öffnung
- 28: Arretierkörper
- 30: Unterseite Arretierkörper
- 32: Vorsprung
- 34: Vorsprung
- 36: Feder
- 38: Bedienelement
- 40: Lagermittel
- 41: Exzenter
- 42: Exzenter
- 44: Verbindungselement
- 46: Bohrung
- 47: Bohrung
- 48: Oberfläche
- 49: Ebene
- 50: Oberseite des Tauchkörpers
- 51: Tellerfeder
- 52: Öffnung
- 54: Doppelkeilanordnung
- 56: Objekt
- 58: Flanschkörper
- 60: Vertiefung
- 62: angeschrägte Fläche
- 64: Keil
- 66: Abschlusskörper
- 68: Schraube
- 70: Verzahnung
- 72: Bedienelement
- 74: Flugzeug

## Patentansprüche

1. Vorrichtung zum Arretieren eines Objekts an einer Schiene (14), aufweisend:
mindestens einen Grundkörper (4),
mindestens einen Arretierkörper (28),
mindestens ein Bedienelement (38), und
mindestens einen Tauchkörper (22), der bewegbar am oder relativ zum Grundkörper (4) gelagert ist,
wobei der Arretierkörper (28) relativ zu dem Grundkörper (4) bewegbar gelagert ist und über mindestens ein Lagermittel (40) mit dem Bedienelement (38) verbunden ist,
wobei das Bedienelement (38) drehbar in dem Grundkörper (4) angeordnet ist, mindestens einen auf den Grundkörper (4) einwirkenden Exzenter (41) aufweist und bei Verdrehung den Arretierkörper (28) zum Grundkörper (4) hin bewegt und
wobei zwischen dem Arretierkörper (28) und dem Tauchkörper (22) eine Feder (36) angeordnet ist.

2. Vorrichtung (2) nach Anspruch 1, wobei das Bedienelement (38) mindestens einen weiteren Exzenter (42) zum Auslenken des Tauchkörpers (22) aufweist, der auf eine Oberfläche (50) des Tauchkörpers (22) einwirkt.

3. Vorrichtung (2) nach Anspruch 1 oder 2, wobei der Grundkörper (4) an seiner Unterseite (8) mindestens einen Vorsprung (10) zum geführten Gleiten in einem Schlitz (12) der Sitzschiene (14) aufweist.

4. Vorrichtung (2) nach einem der vorhergehenden Ansprüche, wobei ein Verbindungselement (44) zwischen jedem Lagermittel (40) und dem Arretierkörper (28) angeordnet ist zum Verringern der mechanischen Steifigkeit mindestens eine Tellerfeder (51) aufweist.

5. Vorrichtung (2) nach einem der vorhergehenden Ansprüche, wobei der Grundkörper (4) einen Vorsprung (16) zum Aufnehmen einer Vertiefung (60) eines Flanschkörpers (58) aufweist.

6. Vorrichtung (2) nach einem der vorhergehenden Ansprüche, wobei eine Keilanordnung (54) an dem Grundkörper (4) zum höhenvariablen Aufnehmen des Objekts (56) angeordnet ist.

7. Vorrichtung (2) nach einem der vorhergehenden Ansprüche, wobei eine Oberfläche (6) des Grundkörpers (4) eine Verzahnung (70) aufweist.

8. Verwendung einer Vorrichtung nach einem der Ansprüche 1 bis 7 in einer Kabine eines Flugzeugs zum Arretieren eines Objekts an einer Sitzschiene (14).

9. Flugzeug mit mindestens einer Passagierkabine, die mit mindestens einer Sitzschiene (14) ausgestattet ist und in dem Objekte (56) mittels mindestens einer erfindungsgemäßen Vorrichtung (2) nach einem der Ansprüche 1 bis 7 an der Sitzschiene (14) anzuordnen sind.

## Claims

1. Apparatus for affixing an object to a rail (14), comprising:
at least one base body (4),
at least one locking body (28),
at least one operating element (38), and
at least one plunger body (22) that is movably held on, or relative to, the base body (4),
wherein the locking body (28) is held so as to be movable relative to the base body (4) and is connected to the operating element (38) by way of at least one bearing means (40),
wherein the operating element (38) is arranged so as to be rotatable in the base body (4), comprises at least one cam (41) that acts on the base body (4), and when rotated moves the locking body (28) towards the base body (4) and
wherein a spring (36) is arranged between the locking body (28) and the plunger body (22).

2. The apparatus (2) of claim 2, wherein the operating element (38) comprises at least one further cam (42) for deflecting the plunger body (22), which acts on a surface (50) of the plunger body (22).

3. The apparatus (2) of claim 1 or 2, wherein the bottom (8) of the base body (4) comprises at least one projection (10) for guided sliding in a slit (12) of the seat rail (14).

4. The apparatus (2) of any one of the preceding claims, wherein a connecting element (44) arranged between each bearing means (40) and the locking body (28) for reducing the mechanical rigidity comprises at least one plate spring (51).

5. The apparatus (2) of any one of the preceding claims, wherein the base body (4) comprises a projection (16) for receiving a recess (60) of a flange body (58).

6. The apparatus (2) of any one of the preceding claims, wherein a wedge arrangement (54) is arranged on the base body (4) for the variable-height receiving of the object (56).

7. The apparatus (2) of any one of the preceding claims, wherein a surface (6) of the base body (4) comprises a tooth arrangement (70).

8. The use of apparatus of any one of claims 1 to 7 in a cabin of an aircraft for locking an object to a seat rail (14).

9. An aircraft with at least one passenger cabin that comprises at least one seat rail (14), in which aircraft objects (56) are to be arranged on the seat rail (14) by means of at least one item of apparatus (2) according to the invention, of any one of claims 1 to 7.

## Revendications

1. Dispositif de blocage d'un objet sur un rail (14), présentant :
- au moins un corps de base (4),
- au moins un corps de blocage (28),
- au moins un élément de commande (38), et
- au moins un corps plongeant (22), qui est monté mobile sur ou par rapport au corps de base (4),
le corps de blocage (28) étant monté mobile par rapport au corps de base (4) et relié à l'élément de commande (38) par l'intermédiaire d'au moins un moyen d'appui (40),
l'élément de commande (38) étant monté rotatif dans le corps de base (4), présentant au moins un excentrique (41) agissant sur le corps de base (4) et déplaçant le corps de blocage (28) en direction du corps de base (4) lors de sa rotation et
un ressort (36) étant disposé entre le corps de blocage (28) et le corps plongeant (22).

2. Dispositif (2) selon la revendication 1, l'élément de commande (38) présentant au moins un autre excentrique (42) destiné à dévier le corps plongeant (22), qui agit sur une surface (50) du corps plongeant (22).

3. Dispositif (2) selon la revendication 1 ou 2, le corps de base (4) présentant au niveau de sa partie inférieure (8) au moins une partie en saillie (10) permettant le glissement guidé dans une fente (12) du rail de siège (14).

4. Dispositif (2) selon l'une des revendications précédentes, un élément de raccordement (44) étant disposé entre chaque moyen d'appui (40) et le corps de blocage (28) et présentant au moins un rondelle Belleville (51) destinée à diminuer la raideur mécanique.

5. Dispositif (2) selon l'une des revendications précédentes, le corps de base (4) présentant une partie en saillie (16) destinée à recevoir un renfoncement (60) d'un corps de bride (58).

6. Dispositif (2) selon l'une des revendications précédentes, un dispositif de levier (54) étant disposé au niveau du corps de base (4) pour permettre le retrait de l'objet (56) à hauteur variable.

7. Dispositif (2) selon l'une des revendications précédentes, une surface (6) du corps de base (4) présentant une denture (70).

8. Utilisation d'un dispositif selon l'une des revendications 1 à 7 dans une cabine d'un avion destiné à bloquer un objet sur un rail de siège (14).

9. Avion prévu d'au moins une cabine de passagers, qui est équipée d'au moins un rail de siège (14) et dans lequel des objets (56) doivent être disposés au moins au moyen d'un dispositif (2) conforme à l'invention selon l'une des revendications 1 à 7 au niveau du rail de siège (14).
